# FASCICULE DE BREVET EUROPEEN

(11) **EP 1 922 250 B1**
(45) Date de publication et mention de la délivrance du brevet: **06.10.2010**
(21) Numéro de dépôt: 06793119.6
(22) Date de dépôt: 31.08.2006
(51) Int. Cl.: B64D 27/26

(54) **AGENCEMENT ET PROCEDE ADAPTE POUR RACCORDER UN PALONNIER A UN MÂT D'ACCROCHAGE DE MOTEUR D'AERONEF**
SYSTEM UND VERFAHREN ZUR VERBINDUNG EINES QUERBALKENS MIT DEM PYLON EINES FLUGZEUGMOTORS
SYSTEM AND METHOD FOR CONNECTING A CROSSBAR TO AN AIRCRAFT ENGINE PYLON

(30) Priorité: 05.09.2005 FR 0552674
(43) Date de publication de la demande: 21.05.2008
(73) Titulaire: AIRBUS OPERATIONS, 31060 Toulouse (FR)
(72) Inventeur: COMBES, Stéphane, F-31660 Buzet sur Tarn (FR); LEVERT, Stéphane, F-31200 Toulouse (FR); LAFONT, Laurent, F-31320 Pechbusque (FR); MOREAU, Dominique, F-31140 Aucamville (FR)
(74) Mandataire: Ilgart, Jean-Christophe
(86) Numéro de dépôt international: PCT/EP2006/065883
(87) Numéro de publication internationale: WO 2007/028764

(56) Documents cités:
- EP-A- 0 564 126
- GB-A- 1 236 917
- US-B1- 6 296 203

## Description

### DOMAINE TECHNIQUE

La présente invention se rapporte de façon générale au domaine des mâts d'accrochage de moteur d'aéronef, chaque mât étant destiné à être interposé entre une voilure d'aéronef et son moteur associé.

L'invention peut être utilisée sur tout type d'aéronef équipé de turboréacteurs ou de turbopropulseurs.

Ce type de mât d'accrochage, également appelé « EMS » (de l'anglais « Engine Mounting Structure »), permet de suspendre un turbomoteur au-dessous de la voilure de l'aéronef, ou bien de monter ce turbomoteur au-dessus de cette même voilure.

Un mât d'accrochage de ce type est connu de EP-0 564 126, qui montre toutes les caractéristiques du préambule de la revendication 1 et constitue aussi l'art antérieur le plus proche de la revendication indépendante 17.

De façon plus particulière, l'invention concerne un agencement adapté pour raccorder un palonnier de dispositif de reprise des efforts de poussée générés par un moteur d'aéronef à une structure rigide d'un mât d'accrochage de ce moteur, et concerne également un dispositif de reprise des efforts de poussée intégrant un tel agencement (revendication 1).

D'autre part, l'invention se rapporte aussi à un procédé de montage d'un moteur d'aéronef sur une structure rigide d'un tel mât d'accrochage (revendication 17).

### ÉTAT DE LA TECHNIQUE ANTÉRIEURE

Un tel mât d'accrochage est en effet prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur.

Dans l'art antérieur, ce dispositif de reprise comprend par exemple deux bielles latérales raccordées d'une part à une partie arrière du carter de soufflante du turbomoteur, et d'autre part à une attache arrière fixée sur le carter central de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Enfin, le mât est pourvu d'une structure secondaire assurant la ségrégation et le maintien des systèmes tout en supportant des carénages aérodynamiques.

Comme cela a été évoqué ci-dessus, les solutions proposées antérieurement prévoient habituellement que le dispositif de reprise des efforts de poussée soit raccordé sur l'attache arrière des moyens d'accrochage.

Par conséquent, le palonnier du dispositif de reprise des efforts de poussée sur lequel sont articulées les extrémités arrière des deux bielles latérales de reprise est monté sur le corps de l'attache moteur arrière, avant que le moteur ne soit hissé vers le mât d'accrochage. Cela implique que suite au hissage du moteur vers le mât d'accrochage, le procédé de montage de ce moteur sur la structure rigide de ce mât nécessite une étape de montage de l'attache moteur avant ainsi qu'une étape de montage de l'attache moteur arrière, mais aucune étape de montage liée au dispositif de reprise des efforts de poussée.

Or il a récemment été observé qu'il était avantageux de prévoir deux points d'attache distincts sur la structure rigide, l'un pour l'attache moteur arrière et l'autre pour le dispositif de reprise des efforts de poussée. Avec une telle configuration, il a donc été nécessaire de prévoir une étape supplémentaire d'assemblage du palonnier du dispositif de reprise, sur la structure rigide du mât.

Cependant, il est noté que cette étape est extrêmement délicate à mettre en oeuvre, étant donné que le hissage du moteur s'effectue habituellement verticalement, et que le système d'axe destiné à pénétrer dans un passage de système d'axe du palonnier préalablement raccordé au moteur est généralement incliné par rapport à la verticale, ce qui génère bien entendu des problèmes de mise en coopération de ces deux éléments.

### EXPOSÉ DE L'INVENTION

L'invention a donc tout d'abord pour but de proposer un agencement adapté pour raccorder un palonnier de dispositif de reprise des efforts de poussée générés par un moteur d'aéronef, à une structure rigide d'un mât d'accrochage de ce moteur, cet agencement présentant une conception permettant de faciliter l'étape d'assemblage du palonnier lors du montage du moteur sur la structure rigide du mât d'accrochage.

Par ailleurs, l'invention a également pour but de proposer un dispositif de reprise des efforts de poussée intégrant un tel agencement, ainsi qu'un mât d'accrochage pourvu d'un tel dispositif de reprise.

Enfin, l'invention a aussi pour but de présenter un procédé de montage d'un moteur sur une structure rigide d'un tel mât d'accrochage.

Pour ce faire, l'invention a pour objet un agencement adapté pour raccorder un palonnier de dispositif de reprise des efforts de poussée générés par un moteur d'aéronef à une structure rigide d'un mât d'accrochage de ce moteur, cet agencement comprenant d'une part une ferrure destinée à être montée fixement sur la structure rigide et étant traversée par un premier passage de système d'axe s'étendant selon un premier axe longitudinal, et comportant d'autre part un système d'axe traversant le premier passage de système d'axe. Selon l'invention, le système d'axe est monté coulissant dans le premier passage de façon à permettre un déplacement de celui-ci selon le premier axe longitudinal, dans un premier sens d'une position normale extraite dans laquelle il est suffisamment en saillie par rapport à la ferrure pour pouvoir coopérer avec le palonnier, à une position de retrait dans laquelle il est escamoté dans cette même ferrure, et inversement dans un second sens de la position de retrait à la position normale extraite. De plus, l'agencement comporte en outre un organe d'extension d'axe porté intérieurement par le système d'axe et capable d'être déplacé parallèlement au premier axe longitudinal, dans le second sens d'une position normale de retrait dans laquelle il est escamoté dans le système d'axe, à une position extraite dans laquelle il est solidaire du système d'axe et en saillie par rapport à celui-ci, et inversement dans le premier sens de la position extraite à la position normale de retrait.

Avantageusement, la conception spécifique de l'agencement selon l'invention permet d'effectuer une étape d'assemblage du palonnier sur cet agencement qui est relativement simple à mettre en oeuvre, même lorsque le système d'axe est incliné par rapport à la verticale et que le moteur est destiné à être hissé verticalement en direction du mât d'accrochage. Effectivement, la mise en place du moteur dans sa position finale par rapport au mât ou dans une position proche de celle-ci s'effectue sans rencontrer de blocage entre le système d'axe et le palonnier accompagnant le déplacement du moteur lors du hissage de ce dernier, étant donné que ce système d'axe est monté coulissant et qu'il peut donc être déplacé vers sa position de retrait dans laquelle il est escamoté dans la ferrure de l'agencement.

A titre d'exemple indicatif, lors du déplacement du moteur vers sa position finale par rapport au mât d'accrochage, le système d'axe coulissant peut être déplacé progressivement de sa position normale extraite à sa position de retrait par appui contre le palonnier raccordé au moteur. Naturellement, d'autres solutions sont envisageables, telles que celle visant à amener et maintenir ce système d'axe dans sa position de retrait avant de procéder au hissage du moteur.

Ensuite, lorsque le moteur a atteint sa position finale par rapport au mât ou une position proche de celle-ci, l'organe d'extension d'axe peut alors être déployé et amené dans sa position extraite dans laquelle son faible diamètre comparé à celui du passage prévu dans le palonnier lui permet de facilement pénétrer à travers ce même passage. L'organe d'extension d'axe traversant le passage de système d'axe du palonnier et s'étendant de préférence au-delà de ce dernier peut ainsi constituer un organe de préhension, de butée, etc., facilement accessible pour un opérateur, et dont le mouvement lui étant appliqué est directement transmis au système d'axe lui étant solidaire.

Par voie de conséquence, il suffit alors par exemple d'employer un outillage approprié pour générer un mouvement de translation de l'organe d'extension d'axe dans le second sens, dans le but de faire pénétrer le système d'axe à travers le palonnier jusqu'à ce qu'il retrouve sa position normale extraite. L'organe d'extension d'axe peut à son tour être ramené dans sa position normale de retrait, par déplacement de celui-ci dans le premier sens, par rapport au système d'axe. Il est noté qu'une autre possibilité qui sera détaillée ultérieurement peut consister à prévoir que l'organe d'extension remplisse le rôle de vis sans fin afin de provoquer un déplacement du système d'axe dans le second sens, vers sa position normale extraite.

Naturellement, cette facilité de montage exposée ci-dessus se retrouve de façon analogue lors de la mise en oeuvre d'un procédé de démontage du moteur, durant laquelle le système d'axe est amené dans sa position de retrait à l'aide de l'organe d'extension d'axe, avant qu'il ne soit procédé à la descente du moteur habituellement verticale.

De préférence, le système d'axe est équipé de moyens de butée permettant de bloquer en translation le système d'axe dans le second sens par rapport à la ferrure, lorsque le système d'axe occupe sa position normale extraite. De plus, ces moyens de butée prennent préférentiellement la forme d'un épaulement prévu sur le système d'axe.

De manière préférentielle, l'agencement comporte un organe de guidage du système d'axe, rapporté solidairement sur la ferrure. Cet organe de guidage peut être pourvu d'une butée capable de bloquer en translation le système d'axe dans le premier sens par rapport à la ferrure, de manière à ce qu'il ne s'échappe pas du premier passage lui étant associé lorsqu'il est déplacé dans ce même premier sens. Par ailleurs, l'organe de guidage peut être conçu pour interdire la rotation du système d'axe autour du premier axe longitudinal durant son mouvement de translation selon ce même axe, ce qui limite les risques de blocage du système d'axe dans son premier passage associé.

Toujours de manière préférentielle, l'organe d'extension d'axe est une vis montée sur le système d'axe, cette vis pénétrant à l'intérieur de ce système d'axe. On peut alors prévoir que cette vis est agencée selon le premier axe longitudinal, donc située coaxialement avec le système d'axe qui la porte. Naturellement, d'autres solutions que la vis pourraient être envisagées pour constituer cet organe d'extension d'axe, sans sortir du cadre de l'invention.

Enfin, le système d'axe comporte un axe intérieur et un axe extérieur concentriques, ces deux axes étant solidaires l'un de l'autre et l'axe intérieur étant creux de manière à permettre le logement de l'organe d'extension d'axe. Ce doublement de l'axe destiné à traverser le palonnier permet donc d'assurer une fonction de secours dite « Fail Safe » en cas de rupture de l'un des deux axes.

L'invention a également pour objet un dispositif de reprise des efforts de poussée générés par un moteur d'aéronef, le dispositif étant destiné à être interposé entre le moteur et une structure rigide d'un mât d'accrochage de ce moteur, et comportant les éléments suivants :
- un agencement tel que celui présenté ci-dessus ;
- deux bielles latérales de reprise des efforts de poussée comprenant chacune une extrémité avant destinée à être raccordée au moteur, ainsi qu'une extrémité arrière ; et
- un palonnier sur lequel sont articulées les deux extrémités arrière des bielles latérales de reprise des efforts de poussée, ce palonnier étant traversé par un second passage de système d'axe s'étendant selon un second axe longitudinal confondu avec le premier axe longitudinal, ce second passage étant traversé par le système d'axe de l'agencement.

De préférence, ce dispositif comporte en outre des moyens démontables de blocage en translation du système d'axe interdisant un mouvement de translation du système d'axe à travers les premier et second passages dans le premier sens. Ces moyens démontables de blocage en translation peuvent prendre la forme d'un écrou vissé sur le système d'axe et étant en appui sur le palonnier.

Un autre objet de la présente invention se rapporte à un mât d'accrochage d'un moteur destiné à être interposé entre une voilure d'aéronef et le moteur, ce mât comportant une structure rigide et des moyens d'accrochage du moteur sur la structure rigide, ces moyens d'accrochage comportant un dispositif de reprise des efforts de poussée générés par le moteur tel que celui décrit ci-dessus.

De préférence, les moyens d'accrochage comportent en outre une attache avant fixée en un premier point de la structure rigide, et une attache arrière fixée en un second point de la structure rigide, le dispositif de reprise des efforts de poussée étant fixé sur la structure rigide en un troisième point distinct des premier et second points.

Le fait que le dispositif de reprise des efforts de poussée soit à présent directement raccordé sur la structure rigide, indépendamment des attaches avant et arrière, permet de limiter considérablement les interactions entre les efforts transitant au travers des différents éléments constitutifs des moyens d'accrochage, et plus spécifiquement entre les efforts transitant par l'attache moteur arrière et le dispositif de reprise.

Avec une telle configuration, il est donc avantageusement possible d'optimiser fortement la conception de l'attache arrière et du dispositif de reprise, et de ce fait d'éviter des surdimensionnements inutiles.

Préférentiellement, le système d'axe est situé de façon inclinée par rapport à une direction verticale du mât, et s'étend de préférence vers l'arrière en s'éloignant de la structure rigide.

Enfin, l'invention a également pour objet un procédé de montage d'un moteur d'aéronef sur une structure rigide d'un mât d'accrochage du moteur tel que celui présenté ci-dessus, le procédé comportant une étape d'assemblage du palonnier, préalablement raccordé sur le moteur par l'intermédiaire des bielles, sur l'agencement préalablement monté sur la structure rigide, l'étape d'assemblage comprend les opérations successives suivantes :
- déplacement dans le second sens ide l'organe d'extension d'axe par rapport au système d'axe occupant sa position de retrait, de manière à ce qu' il traverse le second passage prévu sur le palonnier et jusqu'à ce qu'il atteigne sa position extraite ; et
- mise en mouvement de l'organe d'extension d'axe de manière à provoquer un déplacement du système d'axe à travers les premiers et second passages de système d'axe vers sa position normale extraite.

Bien entendu, avant de procéder à l'opération de déplacement dans le second sens de l'organe d'extension d'axe par rapport au système d'axe, le système d'axe est amené d'une façon quelconque dans sa position de retrait. De préférence, préalablement à l'étape d'assemblage du palonnier, le système d'axe est déplacé de sa position normale extraite à sa position de retrait par appui contre le palonnier lors d'un déplacement du moteur vers une position finale par rapport au mât d'accrochage.

Toujours de façon préférentielle, l'étape d'assemblage du palonnier est précédée d'une étape de montage d'une attache moteur avant ainsi que d'une étape de montage d'une attache moteur arrière.

Par ailleurs, l'opération de mise en mouvement de l'organe d'extension d'axe de manière à provoquer un déplacement du système d'axe à travers les premiers et second passages, est effectuée à l'aide d'un outillage prenant des appuis opposés respectivement sur le palonnier et sur l'organe d'extension d'axe, et en mettant en rotation l'organe d'extension d'axe prenant la forme d'une vis coopérant avec le système d'axe. Ainsi, dans cette forme préférée de réalisation, la vis joue alors le rôle de vis sans fin, et sa rotation entraîne par conséquent un déplacement dans le second sens du système d'axe par rapport à cette vis, qui reste quant à elle dans une position identique par rapport au palonnier, dans la direction du premier axe longitudinal.

Naturellement, l'opération de mise en mouvement de l'organe d'extension d'axe de manière à provoquer un déplacement du système d'axe à travers les premiers et second passages pourrait être réalisée de toute autre façon, telle qu'en mettant simplement cet organe en translation dans le second sens. En effet, l'organe d'extension et le système d'axe étant solidaires l'un de l'autre lorsque l'organe occupe sa position extraite, l'application d'un mouvement de translation à ce dernier est directement transmis au système d'axe.

Enfin, on peut prévoir que l'opération de mise en mouvement de l'organe d'extension d'axe de manière à provoquer un déplacement du système d'axe à travers les premiers et second passages, est réalisée avec une olive de guidage montée sur une extrémité du système d'axe.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un mât d'accrochage selon l'invention ;
- la figure 2 représente une vue schématique partielle en perspective du dispositif de reprise des efforts de poussée appartenant au mât d'accrochage montré sur la figure 1 ;
- les figures 3a à 3d représentent des vues détaillées d'un agencement appartenant au dispositif de reprise des efforts de poussée montré sur la figure 2, cet agencement montré dans différentes configurations étant adapté pour raccorder le palonnier du dispositif de reprise à la structure rigide du mât d'accrochage ;
- la figure 4 représente une vue de dessus de l'agencement montré sur les figures 3a à 3d.
- la figure 5 représente une vue détaillée de côté du dispositif de reprise des efforts de poussée montré sur la figure 2, ce dispositif incorporant un agencement tel que celui montré sur les figures 3a à 3d ; et
- les figures 6a à 6d représentent des vues schématisant différentes opérations d'une étape d'assemblage du palonnier sur l'agencement montré sur les figures 3a à 3d, cette étape étant réalisée lors de la mise en oeuvre d'un procédé de montage d'un moteur d'aéronef sur une structure rigide d'un mât d'accrochage du moteur.

### EXPOSÉ DÉTAILLÉ DE MODES DE RÉALISATION PRÉFÉRÉS

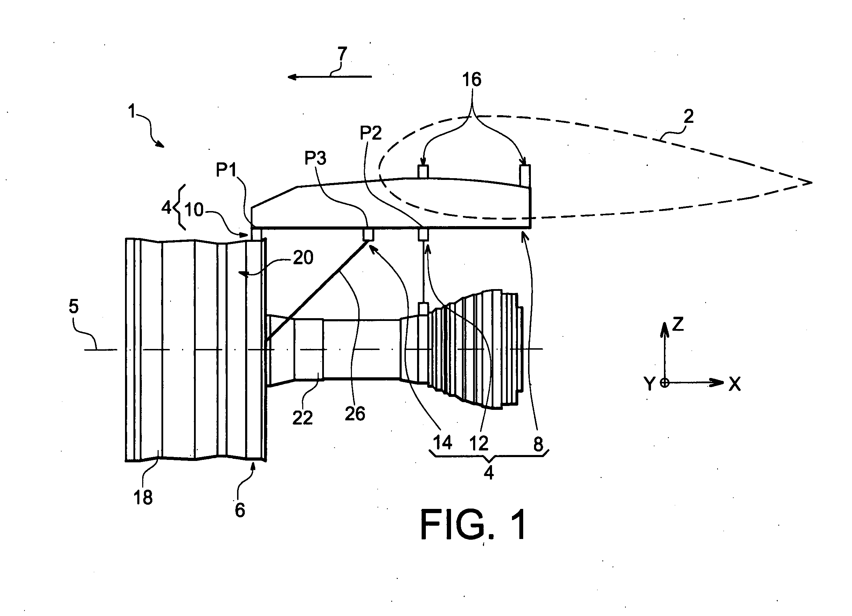

En référence, à la figure 1, on voit un ensemble moteur 1 pour aéronef destiné à être fixé sous une aile 2 de cet aéronef représentée uniquement schématiquement en pointillés pour des raisons de clarté, cet ensemble 1 comportant un mât d'accrochage 4 selon un mode de réalisation préféré de la présente invention, ainsi qu'un moteur 6 tel qu'un turboréacteur accroché sous ce mât 4.

Globalement, le mât d'accrochage 4 comporte une structure rigide 8 portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le mât d'accrochage 4 comporte une autre série d'attaches 16 permettant d'assurer la suspension de cet ensemble 1 sous la voilure 2 de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut voir les deux attaches moteur 10, 12, la série d'attaches 16, le dispositif de reprise des efforts de poussée 14, et la structure rigide 8 du dispositif d'accrochage 4. Les autres éléments constitutifs non représentés de ce dispositif 4, tels que la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

D'autre part, il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur.. Les carters 18 et 20 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors une forme similaire à celle habituellement observée pour les mâts d'accrochage de turboréacteurs, notamment en ce sens qu'il est pourvu de nervures transversales (non représentées) prenant chacune la forme d'un rectangle, et reliant des longerons avant et arrière ainsi que des panneaux latéraux.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18. L'attache moteur avant 10, conçue de manière classique et connue de l'homme du métier, est fixée en un premier point P1 de la structure rigide 8. Il est noté que l'attache avant pourrait également être montée sur le carter central 22, sans sortir du cadre de la présente invention.

D'autre part, l'attache moteur arrière 12, également réalisée de façon classique et connue de l'homme du métier, est quant à elle interposée entre la structure rigide 8 et le carter central 22, et fixée en un second point P2 de la structure rigide 8 placé en arrière par rapport au point P1.

D'autre part, le dispositif de reprise des efforts de poussée 14 représenté schématiquement est fixé en un troisième point P3 de la structure rigide 8, le point P3 étant préférentiellement situé entre les deux points P1 et P2. A ce titre, il est noté que les trois points précités appartiennent de préférence à un plan médian vertical du mât d'accrochage (non représenté).

Par ailleurs, à titre indicatif, en vue de côté comme celle représentée sur la figure 1, le rapport des distances P1P3 / P1P2 peut être compris dans une large plage de 0,1 1 à 0,9, la condition principale recherchée étant de pouvoir laisser évoluer librement en déboîtement le palonnier du dispositif de reprise de poussée 14, sans que celui-ci ne soit gêné par les deux attaches 10 et 12.

Globalement, le dispositif de reprise 14 qui sera détaillé ultérieurement présente deux bielles latérales de reprise des efforts de poussée 26 (une seule étant visible sur la figure 1), chacune de ces billes comportant une extrémité avant raccordée au carter central 22, par exemple sur ou à proximité d'un plan médian horizontal du turbomoteur 6.

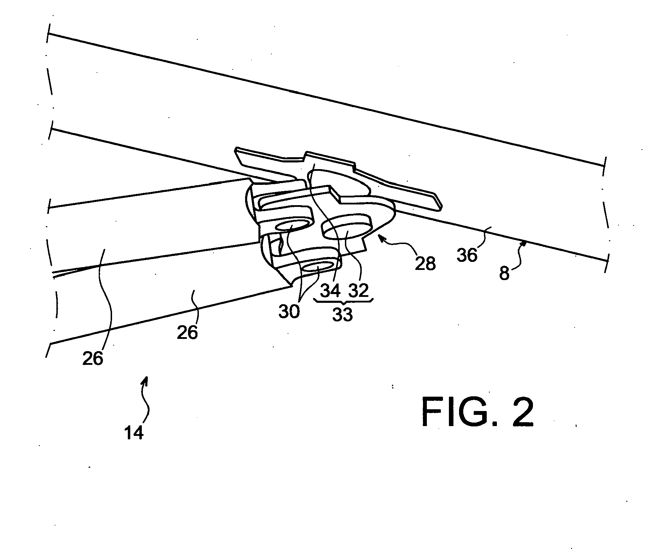

En référence à la figure 2, on peut voir qu'au niveau d'une partie arrière de ce dispositif de reprise 14, les deux bielles latérales 26 ont chacune une extrémité arrière raccordée de façon articulée à un palonnier 28, par l'intermédiaire d'axes 30 qui sont de préférence des axes doubles.

Le palonnier 28 est quant à lui monté de façon articulée sur un agencement 33 du dispositif 14, cet agencement 33 représenté schématiquement étant objet de la présente invention et comprenant de façon générale un système d'axe 32, ainsi qu'une ferrure 34 montée fixement sur un longeron inférieur 36 de la structure rigide 8.

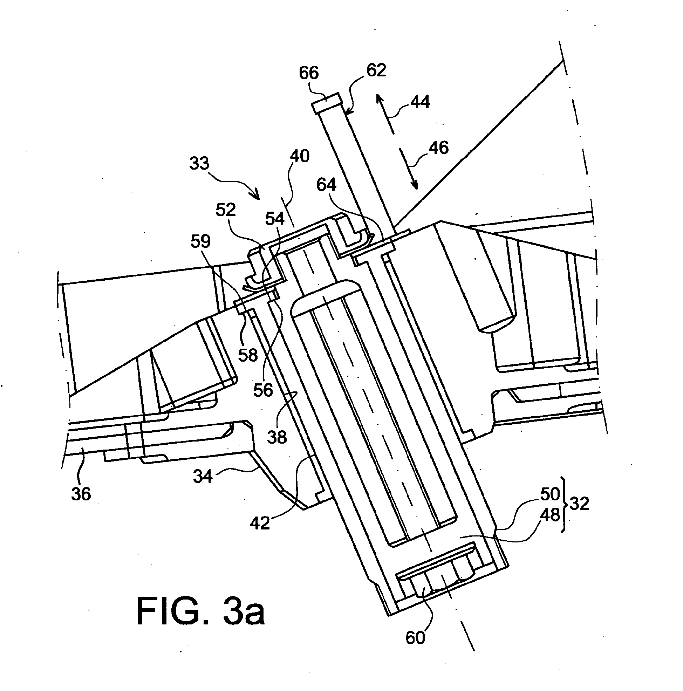

En référence à présent à la figure 3a, il va être décrit un agencement 33 selon un mode de réalisation préféré de la présente invention, cet agencement 33 étant donc adapté pour raccorder le palonnier 28 (non représenté) à la structure rigide 8 du mât d'accrochage 4. Sur cette figure 3a, l'agencement 33 est représenté dans une configuration identique à celle adoptée ultérieurement lorsque le palonnier est monté sur le système d'axe 32. Plus précisément, le système d'axe 32 occupe donc une position dite position normale extraite dans laquelle il est suffisamment en saillie vers le bas par rapport à la ferrure 34 pour pouvoir coopérer avec le palonnier 28.

Toujours en référence à la figure 3a, on peut apercevoir que l'agencement 33 comprend la ferrure 34 montée fixement sur le longeron inférieur 36, par exemple entre deux nervures (non représentées) directement consécutives de la structure rigide 8, cette ferrure 34 faisant saillie vers le bas par rapport au longeron 36 et étant traversée par un premier passage de système d'axe 38 s'étendant selon un premier axe longitudinal 40. De préférence, l'axe 40 est situé dans un plan XZ, et se trouve incliné par rapport à la direction Z de manière à s'étendre vers l'arrière en s'éloignant vers le bas de la structure rigide 8.

Naturellement, le système d'axe 32 traversant le premier passage de système d'axe 38, il présente donc également la même inclinaison que celle qui vient d'être décrite pour l'axe 40, à savoir qu'il s'étend vers l'arrière en s'éloignant de la structure rigide. Par ailleurs, il est noté qu'une bague de frottement sacrificielle 42 peut être interposée entre le système d'axe 32 et le premier passage 38.

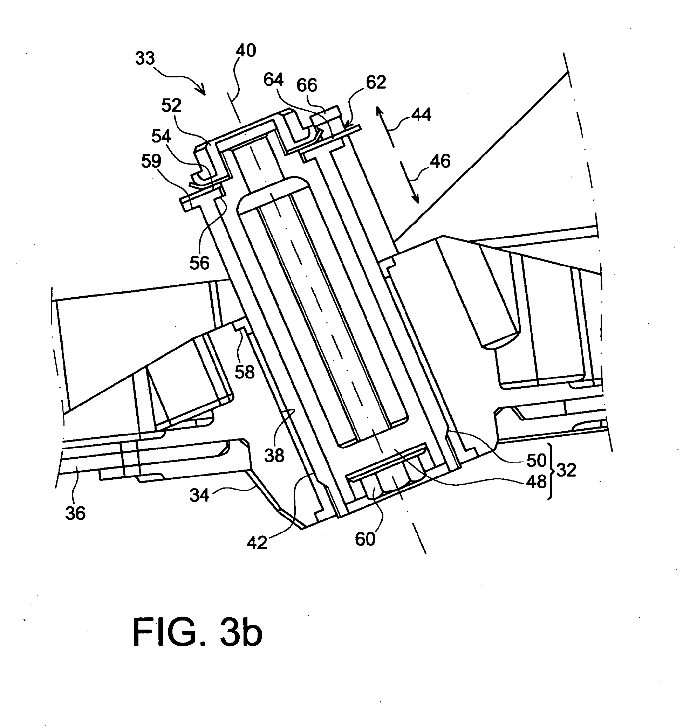

L'une des particularités de la présente invention est que le système d'axe 32 est monté coulissant dans le premier passage 38 de façon à permettre un déplacement de celui-ci, selon le premier axe longitudinal 40, dans un premier sens 44, de la position normale extraite montrée sur la figure 3a à une position dite position de retrait dans laquelle il est escamoté dans la ferrure 34 (figure 3b), et inversement dans un second sens 46 opposé au premier, de la position de retrait à la position normale extraite.

Le système d'axe 32 comporte de préférence un axe intérieur 48 et un axe extérieur 50 concentrique, ces deux axes 48, 50 étant solidarisés l'un à l'autre par l'intermédiaire de moyens quelconques. Dans le mode de réalisation préféré représenté, cette fixation entre l'axe extérieur 50 pouvant être qualifié d'axe principal et l'axe intérieur 48 pouvant quant à lui être qualifié d'axe de secours d₁₁ type « Fail Safe », est réalisée par l'intermédiaire d'une combinaison entre une butée, et un écrou 52 monté sur une extrémité supérieure de l'axe 48 et étant en appui contre une extrémité supérieure de l'axe 50. La butée précitée est obtenue par des épaulements 54, 56 respectivement prévus sur les axes 48 et 50, et pratiquées de manière à pouvoir stopper le mouvement de l'axe 48 vers le haut par rapport à l'axe 50 lors du vissage de l'écrou 52. Une fois ceci réalisé, le système d'axe 32 devient en effet un ensemble compact et solidaire capable de coulisser dans le premier passage 38.

Le système d'axe 32 est maintenu dans sa position normale extraite montrée sur la figure 3a à l'aide de moyens de butée permettant de le bloquer en translation dans le second sens 46 par rapport à la ferrure 34. Ces moyens de butée appartenant au système d'axe 32 prennent de préférence la forme d'un épaulement 58 prévu sur une extrémité supérieure de l'axe extérieur 50, cet épaulement 58 coopérant donc avec une surface d'appui supérieure 59 de la ferrure 34.

En revanche, il est noté que l'agencement 33 est bien entendu conçu pour autoriser un déplacement en translation du système 32 dans le premier sens 44 par rapport à la ferrure 34, lorsque ce système occupe sa position normale extraite.

Une autre particularité de la présente invention réside dans le fait que l'agencement 33 comporte un organe d'extension d'axe 60 porté intérieurement par l'axe intérieur 48 du système d'axe, cet organe 60 étant capable d'être déplacé parallèlement au premier axe longitudinal 40, dans le second sens 46, d'une position normale de retrait telle que montrée sur la figure 3a dans laquelle il est escamoté dans l'axe intérieur 48, à une position extraite dans laquelle il est solidaire du système d'axe 32 et en saillie par rapport à celui-ci, et inversement dans le premier sens 44 de la position extraite à la position normale de retrait. Comme cela sera exposé de façon plus détaillée ci-après, le déploiement de l'organe 60 permet à celui-ci de facilement pénétrer à travers le passage prévu dans le palonnier, lorsque le système d'axe 32 occupe sa position de retrait. De cette manière, l'organe d'extension d'axe 60 traversant le passage de système d'axe du palonnier et s'étendant de préférence au-delà de ce dernier peut ainsi constituer un organe de préhension, de butée, et., facilement accessible pour un opérateurs, et dont le mouvement lui étant appliqué est directement transmis au système d'axe 32 lui étant solidaire. Par conséquent, il devient alors aisé de faire pénétrer le système d'axe 32 dans le passage de système d'axe du palonnier, par une simple mise en mouvement de l'organe 60.

Afin de permettre le logement de l'organe d'extension d'axe 60 dans l'axe intérieur 48, celui-ci présente donc.une forme creuse. D'autre part, dans le cas préférentiel où l'organe 60 est constitué par une simple vis, l'axe intérieur 48 doit alors également présenter un filetage destiné à coopérer avec cette dernière.

A titre indicatif, il est noté que le rapport entre le diamètre de la vis 60 préférentiellement agencée selon le premier axe longitudinal 40, et celui du système d'axe 32 identique à celui de l'axe extérieur 50, est préférentiellement compris entre 0,2 et 0,8.

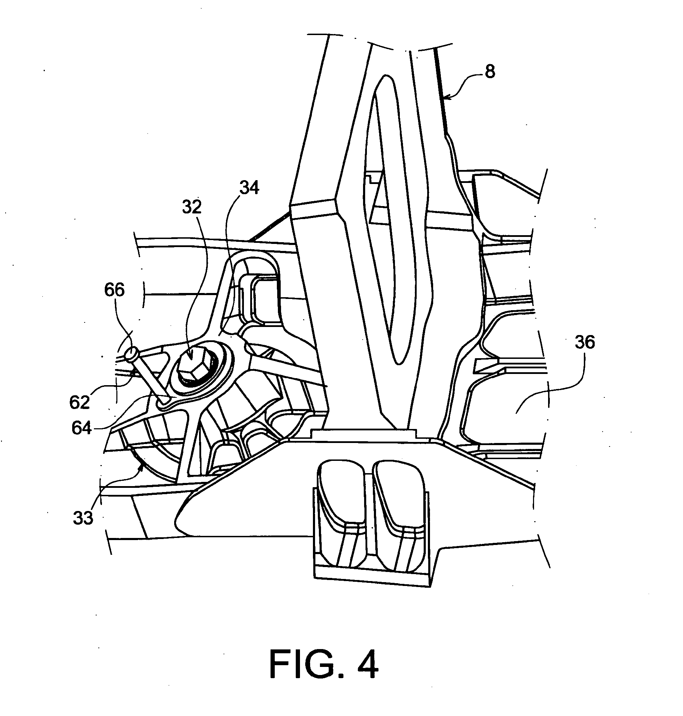

En référence à présent conjointement aux figures 3a et 4, on peut apercevoir que l'agencement 33 comporte un organe de guidage 62 du système d'axe 32, qui est rapporté solidairement sur la ferrure 34. Plus précisément, cet organe de guidage 62 prend la forme d'une tige / d'un bras disposé de façon décalée par rapport à l'axe longitudinal 40, parallèlement à ce dernier. Il fait saillie dans le premier sens 44 à partir d'une portion supérieure de la ferrure 34, et traverse un orifice pratiqué dans une plaque 64 solidaire du système d'axe 32, par exemple agencée entre l'écrou 52 et l'axe extérieur 50.

Par conséquent, lors d'une mise en mouvement du système d'axe 32, la coopération à faible jeu entre l'orifice de la plaque 64 et l'organe de guidage 62 permet non seulement d'assurer que le système 32 va se translater selon la direction de l'axe 40 par rapport à la ferrure 34, mais interdit surtout la rotation du système 32 autour de ce même premier axe longitudinal 40. Cela limite avantageusement les risques de blocage du système d'axe 32 dans son premier passage 38 associé.

En outre, l'organe de guidage 62 situé au sein du caisson rigide est pourvu d'une butée 66 capable de bloquer en translation le système d'axe dans le premier sens 44 par rapport à la ferrure 34. Cette butée 66 est placée au niveau de l'extrémité supérieure de la tige, à un emplacement tel qu'elle empêche le système 32 de s'échapper totalement du premier passage 38.

En référence à présent à la figure 3b, on peut voir l'agencement 33 dans une configuration différente, dite « configuration II » par opposition à celle montrée sur la figure 3a correspondant à une configuration normale de repos dite « configuration I », dans laquelle le système d'axe 32 a été déplacé dans le premier sens 44 jusqu'à adopter sa position de retrait où il est escamoté dans la ferrure 34, l'organe d'extension d'axe 60 occupant quant à lui toujours sa position normale de retrait dans laquelle il est escamoté dans le système d'axe 32. De préférence, on peut faire en sorte que dans cette configuration, le système d'axe 32 ne fasse plus du tout saillie vers le bas de la ferrure 34. Par ailleurs, il est indiqué que cette configuration peut être maintenue en bloquant d'une manière quelconque le système d'axe coulissant 32 par rapport à la ferrure 34, dans le second sens.

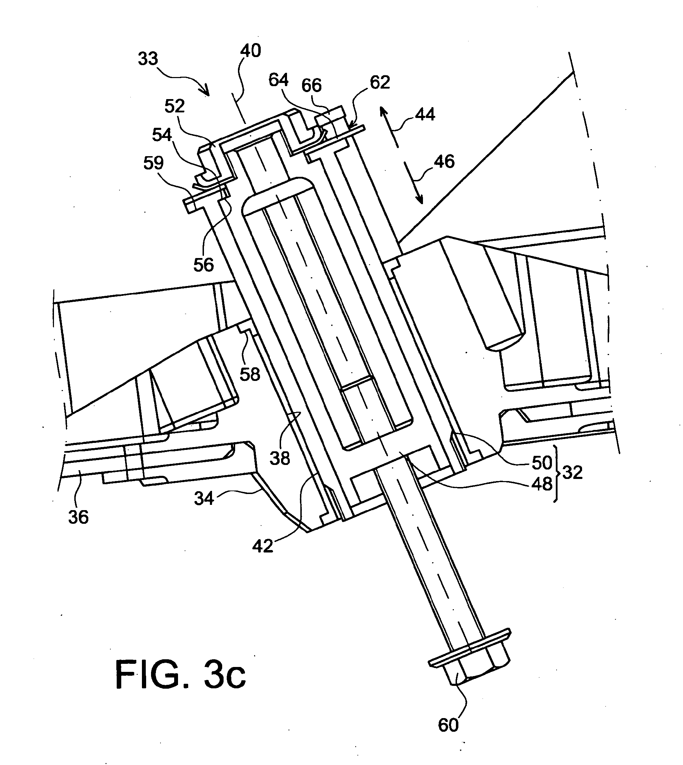

En référence à la figure 3c, on peut voir l'agencement 33 dans une configuration encore différente, dite « configuration III » dans laquelle le système d'axe 32 occupe toujours sa position de retrait maintenue par des moyens quelconque, tandis que l'organe d'extension d'axe 60 a été déplacé selon l'axe 40 dans le second sens 46 jusqu'à adopter sa position extraite dans laquelle il est solidaire du système d'axe 32 et en saillie par rapport à celui-ci, vers le bas. Naturellement, le déplacement de l'organe d'extension d'axe 60 dans le second sens 46 s'effectue par dévissage de la vis. De plus, la coopération entre les filets de cette vis et ceux de l'axe intérieur 48 permet simultanément d'obtenir le maintien de la vis dans sa position extraite) ainsi que d'assurer la solidarisation entre cet organe d'extension d'axe 60 et le système d'axe 32.

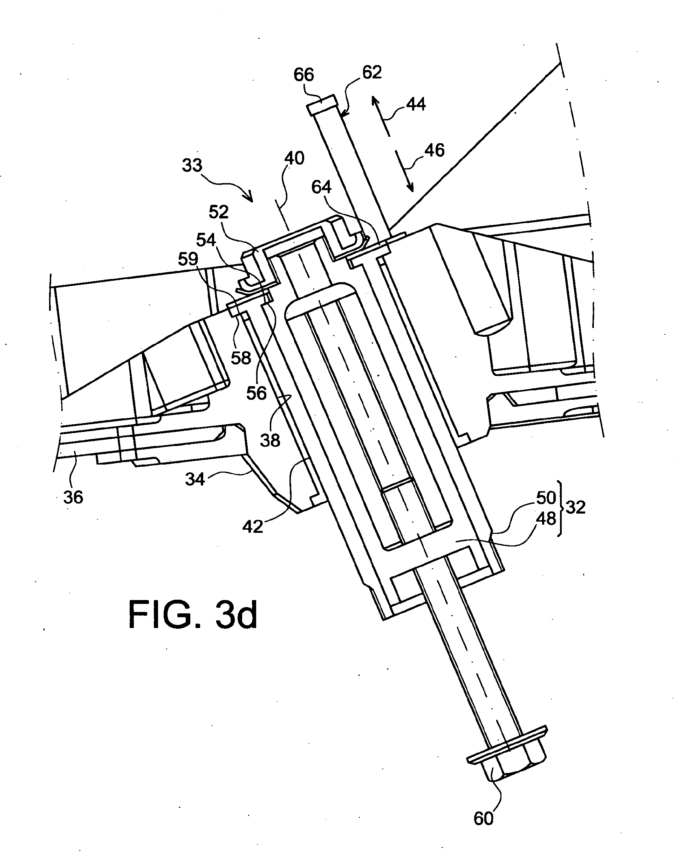

Enfin, la figure 3d montre une autre configuration dite « configuration IV » dans laquelle le système d'axe 32 a retrouvé sa position normale extraite, maintenue par le contact entre l'épaulement 58 de l'axe 50 et la surface 59, tandis que l'organa d'extension d'axe 60 occupe toujours sa positron extraite.

L'ensemble de ces configurations sont destinées à être successivement adoptées par l'agencement 33 durant la mise en oeuvre d'un procédé de montage d'un moteur d'aéronef sur une structure rigide d'un mât d'accrochage du moteur, comme cela ressortira ci-après dans la description détaillée d'un tel procédé.

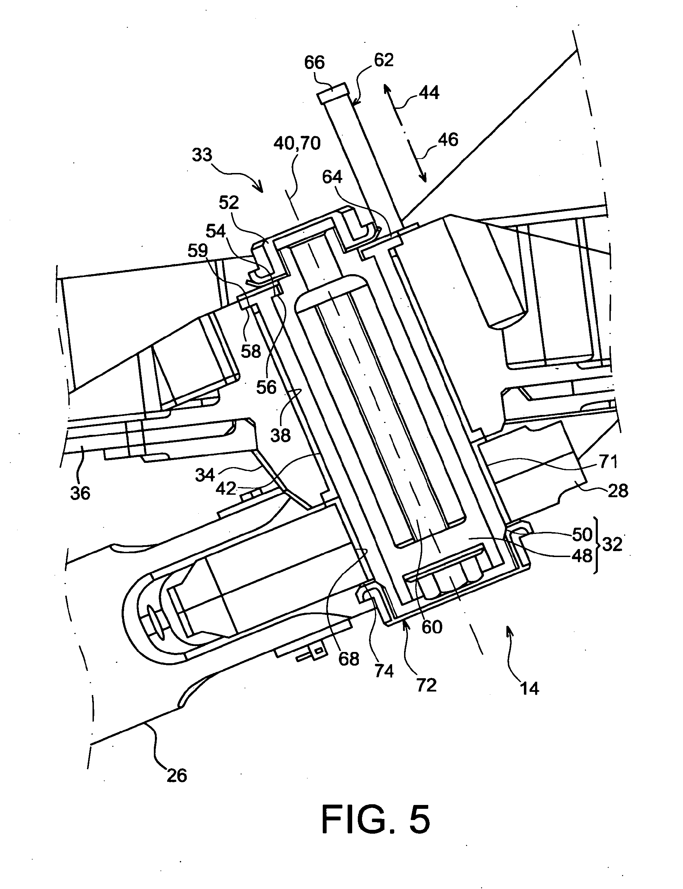

En référence à présent à la figure 5, on peut apercevoir le dispositif de reprise des efforts de poussée 14 représenté de façon détaillée et incorporant l'agencement 33 qui vient d'être décrit, le dispositif 14 étant alors montré dans une configuration entièrement montée identique à la configuration I, dans laquelle le palonnier 28 coopère avec le système d'axe 32.

Comme cela a été évoqué précédemment, le dispositif de reprise 14 comprend non seulement l'agencement 33, mais également deux bielles latérales de reprise des efforts de poussée 26 comprenant chacune une extrémité avant raccordées au moteur, ainsi qu'une extrémité arrière raccordée au palonnier 28 traversé par un second passage de système d'axe 68. Ce second passage 68 s'étend donc selon un second axe longitudinal 70, qui, lorsque le dispositif 14 se trouve dans la configuration entièrement montée telle que représentée, est confondu avec le premier axe longitudinal 40. Par ailleurs, le second passage 68 est bien entendu traversé par le système d'axe 32 de l'agencement 33, et, ici encore, il est possible de prévoir une bague de frottement sacrificielle 71 entre le système d'axe 32 et le second passage 68.

Le dispositif 14 comporte en outre des moyens démontables de blocage en translation 72 du système d'axe 32 interdisant un mouvement de translation du système d'axe à travers les premier et second passages 38, 68 dans le premier sens 44. Ces moyens 72 sont naturellement montés sur le système d'axe 32 uniquement après que celui-ci ait traversé le second passage 68, pour finaliser le montage du dispositif 14.

De préférence, les moyens démontables de blocage en translation prennent la forme d'un écrou 72 vissé sur une extrémité inférieure de l'axe extérieur 50, et en appui sur une surface d'appui inférieure 74 du palonnier 28. Ainsi, une fois le dispositif de reprise 14 entièrement monté, le système d'axe 32 est bloqué en translation selon l'axe 40 dans les deux sens 44, 46, respectivement par la coopération entre l'épaulement 58 et la surface 59, et par la coopération entre l'écrou 72 et la surface 74. Bien entendu, ce blocage est obtenu lorsque le palonnier 28 est en appui contre la ferrure 34 portant le système d'axe 32, sans être forcement en contact direct avec celui-ci.

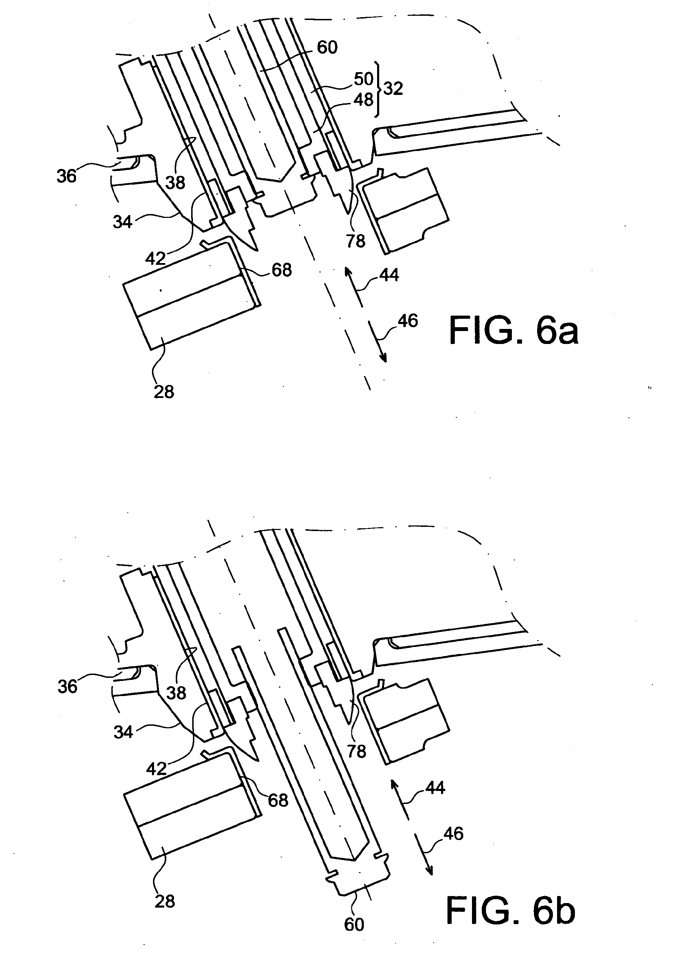

A présent en référence aux figures 6a à 6d, on peut apercevoir la schématisation de différentes opérations d'une étape d'assemblage du palonnier 28 sur l'agencement 33, cette étape étant réalisée lors de la mise en oeuvre d'un procédé de montage d'un moteur d'aéronef sur une structure rigide d'un mât d'accrochage du moteur.

Lors de la mise en oeuvre d'un tel procédé, il est d'abord de préférence fait en sorte que le palonnier 28 soit raccordé sur le moteur 6 par l'intermédiaire des bielles 26, tandis que l'agencement 33 est quant à lui préalablement monté sur la structure rigide 8, en attente dans la configuration I.

Le procédé débute alors de préférence de façon classique en hissant le moteur 6 verticalement vers le mât 4 par l'intermédiaire de moyens conventionnels, jusqu'à ce que ce moteur atteigne sa position finale par rapport au mât ou une position proche de celle-ci.

A un instant donné du déplacement vertical du moteur 6 vers sa position finale, l'extrémité inférieure du système d'axe 32 de l'Agencement 33 entre en appui contre le palonnier 28 suivant le mouvement de ce même moteur. A ce titre, préalablement au hissage, il est possible de monter une olive de guidage 78 sur une extrémité inférieure du système 32, telle que celle visible sur la figure 6a, de manière à ce que cette olive coïncide avec le second passage 68 dans lequel elle est donc susceptible de pénétrer. De cette façon, l'appui de l'olive 78 contre la partie supérieure du second passage 68 dans lequel elle pénètre partiellement implique que le système 32 est déplacé dans le premier sens 44 durant la fin du hissage du moteur. Par conséquent, il est à comprendre que le système 32 est déplacé automatiquement de sa position normale extraite à sa position de retrait durant le déplacement vertical du moteur, par simple appui contre le palonnier 28 en mouvement.

A cet instant où le moteur occupe donc sa position finale ou une position proche de celle-ci, l'agencement 33 est alors maintenu dans sa configuration II par le palonnier 28, comme on peut l'apercevoir sur la figure 6a.

Ensuite, il est de préférence procédé à une étape de montage de l'attache moteur avant 10 ainsi qu'à une étape de montage de l'attache moteur arrière 12 sur le mât d'accrochage, d'une façon conventionnelle et connue de l'homme du métier.

L'étape d'assemblage du palonnier 28 débute alors lorsque le système d'axe 32 occupe sa configuration II, montrée sur les figures 3b et 6a.

A partir de ce moment, une première opération consiste à déplacer, dans le second sens 46, l'organe d'extension d'axe 60 par rapport au système d'axe 32 occupant sa position de retrait, de manière à ce qu'il traverse le second passage 68 et jusqu'à ce qu'il atteigne sa position extraite, comme cela est montré sur la figure 6b. L'agencement 33 se trouve alors dans sa configuration III, dans laquelle on peut apercevoir que l'organe d'extension 60 fait largement saillie du palonnier 28, vers le bas. Naturellement, ce passage à la position extraite s'effectue simplement en dévissant la vis 60, ce qui n'implique aucun déplacement du système d'axe 32 qui reste maintenu dans sa position de retrait.

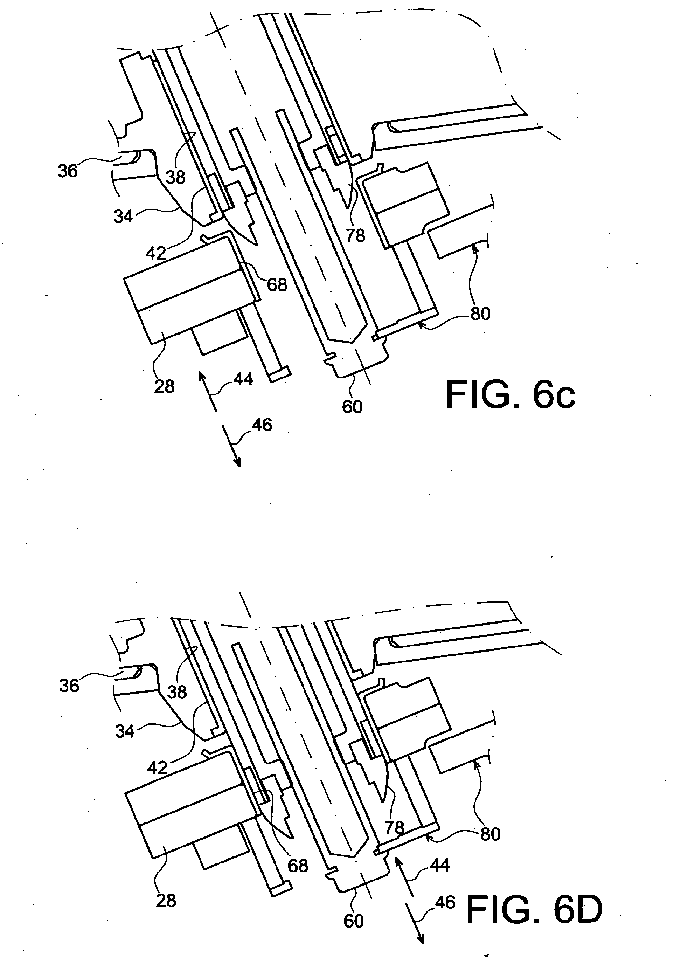

Ensuite, il est procédé à une opération de mise en mouvement de l'organe d'extension d'axe 60, de manière à provoquer un déplacement du système d'axe 32 dans le second sens 46, à travers les premiers et second passages 38, 68. Cette opération de mise en mouvement schématisée sur les figures 6c et 6d est par exemple effectuée à l'aide d'un outillage prenant des appuis opposés respectivement sur le palonnier 28 et sur l'organe d'extension d'axe 60, telle qu'une « cloche ». En effet, une fois cette cloche 80 installé comme mentionné précédemment, il suffit alors de mettre en rotation la vis 60 remplissant la fonction de vis sans fin, pour provoquer un déplacement dans le second sens 46 de l'axe intérieur 48, et donc de l'ensemble du système d'axe 32, comme cela a été schématiquement représenté sur la figure 6d. Lors de cette.rotation, la vis 60 tourne donc en restant dans une position identique par rapport au palonnier 28 selon l'axe 40, tout en pénétrant progressivement dans le système d'axe 32 se déplaçant dans le second sens.

Enfin, si cela s'avère nécessaire, il est ensuite mis en oeuvre une opération visant à déplacer, toujours dans le premier sens 44, l'organe d'extension d'axe 60 par rapport au système d'axe 32 occupant sa position normale extraite, de manière à l'amener dans sa position normale de retrait. Bien entendu, cette opération est réalisée après avoir retiré la cloche 80, et seulement si la mise en rotation de la vis 60 réalisée lors de l'opération précédente n'a pas déjà conduit à placer celle-ci dans sa position normale de retrait.

Pour finir, après que l'olive de guidage ait été retirée, les moyens démontables de blocage en translation 72 sont ensuite assemblés sur le système d'axe 32, ce qui permet d'aboutir à un moteur entièrement monté sur son mât d'accrochage associé, tel que cela est montré sur la figure 5.

Bien entendu, diverses modifications peuvent être apportées par l'homme du métier au mât d'accrochage 4, au dispositif de reprise des efforts de poussée 14, à l'agencement 33 et au procédé de montage qui viennent d'être décrits, uniquement à titre d'exemples non limitatifs. A cet égard, on peut notamment indiquer que si l'invention a été décrite comme permettant de suspendre le moteur sous la voilure de l'aéronef, elle pourrait également être réalisée de manière à assurer une mise en place de ce moteur au-dessus de cette même voilure.

## Revendications

1. Agencement (33) adapté pour raccorder un palonnier (28) de dispositif de reprise des efforts de poussée générés par un moteur (6) d'aéronef à une structure rigide (8) d'un mât d'accrochage (4) de ce moteur, ledit agencement (33) comprenant d'une part une ferrure (34) destinée à être montée fixement sur ladite structure rigide (8) et étant traversée par un premier passage de système d'axe (38) s'étendant selon un premier axe longitudinal (40), et comportant d'autre part un système d'axe (32) traversant ledit premier passage de système d'axe (38),
**caractérisé en ce que** ledit système d'axe (32) est monté coulissant dans le premier passage (38) de façon à permettre un déplacement de celui-ci selon le premier axe longitudinal, dans un premier sens (44) d'une position normale extraite dans laquelle il est suffisamment en saillie par rapport à ladite ferrure (34) pour pouvoir coopérer avec le palonnier (28), à une position de retrait dans laquelle il est escamoté dans cette même ferrure, et inversement dans un second sens (46) de ladite position de retrait à ladite position normale extraite, et **en ce que** l'agencement comporte en outre un organe d'extension d'axe (60) porté intérieurement par ledit système d'axe (32) et capable d'être déplacé parallèlement audit premier axe longitudinal, relativement audit système d'axe (32), dans ledit second sens (46) d'une position normale de retrait dans laquelle il est escamoté dans ledit système d'axe (32), à une position extraite dans laquelle il est solidaire du système d'axe (32) et en saillie par rapport à celui-ci, et inversement dans ledit premier sens (44) de ladite position extraite à ladite position normale de retrait.

2. Agencement (33) selon la revendication 1, **caractérisé en ce que** ledit système d'axe (32) est équipé de moyens de butée (58) permettant de bloquer en translation ledit système d'axe (32) dans ledit second sens (46) par rapport à ladite ferrure (34), lorsque ledit système d'axe (32) occupe sa position normale extraite.

3. Agencement (33) selon la revendication 2, **caractérisé en ce que** lesdits moyens de butée prennent la forme d'un épaulement (58) prévu sur ledit système d'axe (32).

4. Agencement (33) selon l'une quelconque des revendications précédentes, **caractérisé en ce qu'**il comporte un organe de guidage (62) du système d'axe (32), rapporté solidairement sur ladite ferrure (34).

5. Agencement (33) selon la revendication 4, **caractérisé en ce que** ledit organe de guidage (62) est pourvu d'une butée (66) capable de bloquer en translation ledit système d'axe (32) dans ledit premier sens (44) par rapport à ladite ferrure (34).

6. Agencement (33) selon la revendication 4 ou la revendication 5, **caractérisé en ce que** ledit organe de guidage (62) est conçu pour interdire la rotation du système d'axe (32) autour du premier axe longitudinal (40) durant son mouvement de translation selon ce même axe.

7. Agencement (33) selon l'une quelconque des revendications précédentes, **caractérisé en ce que** ledit organe d'extension d'axe est une vis (60) montée sur ledit système d'axe (32), cette vis pénétrant à l'intérieur de ce système d'axe.

8. Agencement (33) selon la revendication 4 ou la revendication 7, **caractérisé en ce que** ladite vis (60) est agencée selon ledit premier axe longitudinal (40).

9. Agencement (33) selon l'une quelconque des revendications précédentes, **caractérisé en ce que** ledit système d'axe (32) comporte un axe intérieur (48) et un axe extérieur (50) concentriques, ces deux axes étant solidaires l'un de l'autre et l'axe intérieur (48) étant creux de manière à permettre le logement dudit organe d'extension d'axe (60).

10. Dispositif (14) de reprise des efforts de poussée générés par un moteur d'aéronef, ledit dispositif étant destiné à être interposé entre ledit moteur (6) et une structuré rigide (8) d'un mât d'accrochage (4) de ce moteur, et comportant les éléments suivants :
- un agencement (33) selon l'une quelconque des revendications précédentes ;
- deux bielles latérales de reprise des efforts de poussée (26) comprenant chacune une extrémité avant destinée à être raccordée audit moteur, ainsi qu'une extrémité arrière ; et
- un palonnier (28) sur lequel sont articulées les deux extrémités arrière des bielles latérales de reprise des efforts de poussée (26), ce palonnier étant traversé par un second passage de système d'axe (68) s'étendant selon un second axe longitudinal (70) confondu avec ledit premier axe longitudinal (40), ledit second passage (70) étant traversé par ledit système d'axe (32) de l'agencement.

11. Dispositif (14) de reprise des efforts de poussée selon la revendication 10, **caractérisé en ce qu'**il comporte en outre des moyens démontables (72) de blocage en translation du système d'axe interdisant un mouvement de translation dudit système d'axe (32) à travers les premier et second passages (38, 68), dans ledit premier sens (44).

12. Dispositif (14) de reprise des efforts de poussée selon la revendication 11, **caractérisé en ce que** lesdits moyens démontables de blocage en translation prennent la forme d'un écrou (72) vissé sur ledit système d'axe (32) et étant en appui sur ledit palonnier (28).

13. Mât d'accrochage (4) d'un moteur (6) destiné à être interposé entre une voilure (2) d'aéronef et ledit moteur (6), ledit mât comportant une structure rigide (8) et des moyens d'accrochage du moteur (6) sur ladite structure rigide (8), lesdits moyens d'accrochage comportant un dispositif de reprise des efforts de poussée (14) générés par le moteur (6) selon l'une quelconque des revendications 10 à 12.

14. Mât d'accrochage (4) selon la revendication 13, **caractérisé en ce que** lesdits moyens d'accrochage comportent en outre une attache avant (10) fixée en un premier point (P1) de la structure rigide (8), et une attache arrière (12) fixée en un second point (P2) de la structure rigide (8), et **en ce que** ledit dispositif de reprise des efforts de poussée (14) est fixé sur ladite structure rigide (8) en un troisième point (P3) distinct desdits premier et second points (P1, P2).

15. Mât d'accrochage (4) selon la revendication 13 ou la revendication 14, **caractérisé en ce que** ledit système d'axe (32) est situé de façon inclinée par rapport à une direction verticale (Z) dudit mât.

16. Mât d'accrochage (4) selon la revendication 15, **caractérisé en ce que** ledit système d'axe (32) s'étend vers l'arrière en s'éloignant de la structure rigide (8).

17. Procédé de montage d'un moteur (2) d'aéronef sur une structure rigide (8) d'un mât d'accrochage (4) du moteur selon l'une quelconque des revendications 13 à 16, **caractérisé en ce qu'**il comporte une étape d'assemblage dudit palonnier (28), préalablement raccordé sur ledit moteur par l'intermédiaire des bielles (26), sur ledit agencement (33) préalablement monté sur ladite structure rigide (8), ladite étape d'assemblage comprend les opérations successives suivantes :
- déplacement dans le second sens (46) de l'organe d'extension d'axe (60) par rapport au système d'axe (32) occupant sa position de retrait, de manière à ce qu'il traverse ledit second passage (68) prévu sur le palonnier (28) et jusqu'à ce qu'il atteigne sa position extraite ; et
- mise en mouvement de l'organe d'extension d'axe (60) de manière à provoquer un déplacement dudit système d'axe (32) à travers lesdits premiers et second passages de système d'axe (38, 68) vers sa position normale extraite.

18. Procédé de montage selon la revendication 17, **caractérisé en ce que** préalablement à ladite étape d'assemblage dudit palonnier (28), ledit système d'axe (32) est déplacé de sa position normale extraite à sa position de retrait par appui contre ledit palonnier (28) lors d'un déplacement dudit moteur vers une position finale par rapport au mât d'accrochage.

19. Procédé de montage selon la revendication 17 ou la revendication 18, **caractérisé en ce que** ladite étape d'assemblage dudit palonnier (28) est précédée d'une étape de montage d'une attache moteur avant (10) ainsi que d'une étape de montage d'une attache moteur arrière (12).

20. Procédé de montage selon l'une quelconque des revendications 17 à 19, **caractérisé en ce que** ladite opération de mise en mouvement de l'organe d'extension d'axe (60) de manière à provoquer un déplacement dudit système d'axe (32) à travers lesdits premiers et second passages (38, 68), est effectuée à l'aide d'un outillage (80) prenant des appuis opposés respectivement sur ledit palonnier (28) et sur ledit organe d'extension d'axe (60), et en mettant en rotation l'organe d'extension d'axe (60) prenant la forme d'une vis coopérant avec ledit système d'axe (32).

21. Procédé de montage selon l'une quelconque des revendications 17 à 20, **caractérisé en ce que** ladite opération de mise en mouvement de l'organe d'extension d'axe (60) de manière à provoquer un déplacement dudit système d'axe (32) à travers lesdits premiers et second passages (38, 68), est réalisée avec une olive de guidage (78) montée sur une extrémité du système d'axe (32).

## Claims

1. Arrangement (33) adapted to connect an evener bar (28) of a thrust mount device, transferring thrust loads generated by an aircraft engine (6), onto a rigid structure (8) of an engine mount (4), said arrangement (33) comprising firstly a bracket (34) intended to be fixedly mounted on said rigid structure (8) and through which a first pin system passageway (38) passes extending along a first longitudinal axis (40), and secondly comprising a pin system (32) passing through said first pin system passageway (38),
**characterized in that** said pin system (32) is slidingly mounted in the first passageway (38) so that it can be moved along the first longitudinal axis in a first direction (44) from a normal extended position in which it projects sufficiently with respect to said bracket (34) so that it can cooperate with the evener bar (28), to a retracted position in which it is retracted within this same bracket, and conversely in a second direction (46) tram said retracted position to said normal extended position, and **in that** the arrangement also comprises a pin extending member (60) carried internally by said pin system (32) and able to be moved parallel to said first longitudinal axis, relative to said pin system (32), in said second direction (46) from a normal retracted position in which it is retracted within said pin system (32), to an extended position in which it joined to the pin system (32) and projects beyond this system, and conversely in said first direction (44) from said extended position to said normal retracted position.

2. Arrangement (33) according to claim 1, **characterized in that** said pin system (32) is equipped with abutment means (58) used to block said pin system (32) in translation in said second direction (46) relative to said bracket (34), when said pin system (32) lies in its normal extended position.

3. Arrangement (33) according to claim 2, **characterized in that** said abutment means have the form of a shoulder (58) provided on said pin system (32).

4. Arrangement (33) according to any of the preceding claims, **characterized in that** it comprises a guide member (62) for the pin system (32), secured to said bracket (34).

5. Arrangement (33) according to claim 4, **characterized in that** said guide member (62) is provided with an abutment (66) able to block said pin system (32) in translation in said first direction (44) relative to said bracket (34).

6. Arrangement (33) according to claim 4 or claim 5, **characterized in that** said guide member (62) is deigned to present rotation of the pin system (32) about the first longitudinal axis (40) during its translation movement along this same axis.

7. Arrangement (33) according to any of the preceding claims, **characterized in that** said pin extending member is a screw (60) mounted on said pin system (32), this screw entering this pin system.

8. Arrangement (33) according to claim 4 or claim 7, **characterized in that** said screw (60) is arranged along said first longitudinal axis (40).

9. Arrangement (33) according to any of the preceding claims, **characterized in that** said pin system (32) comprises an inner pin (48) and an outer pin (50) that are concentric, these two pins being secured to each other and the inner pin (48) being hollow so that it can house said pin extending member (60).

10. Thrust mount device (14) transferring thrust loads generated by an aircraft engine, said device being intended to be positioned between said engine (6) and a rigid structure (8) of an engine mount (4), and comprising the following elements:
- an arrangement (33) according to any of the preceding claims;
- two side thrust links (26) each comprising one forward end intended to be connected to said engine, and one aft end; and
- an evener bar (28) on which the two aft ends of side thrust links (26) are pivoted, a second pin system passageway (68) passing through this evener bar and extending along a second longitudinal axis (70) merging with said first longitudinal, 1 axis (40), said pin system (32) of the arrangement passing through said second passageway (68).

11. Thrust mount device (14) according to claim 10, **characterized in that** it also comprises dismountable means (72) to block the pin system in translation, preventing translational movement of said pin system (32) through the first and second passageways (38, 68) in said first direction (44).

12. Thrust mount device (14) according to claim 11, **characterized in that** said dismountable means for blocking in translation are in the form of a nut (72) screwed onto said pin system (32) and bearing upon said evener bar (28).

13. Engine mount (4) for an engine (6) intended to be inserted between an aircraft wing (2) and said engine (6), said engine mount comprising a rigid structure (8) and mounting means to mount the engine (6) on said rigid structure (8), said mounting means comprising a thrust mount device (14) transferring thrust loads generated by the engine (6) according to any of claims 10 to 12.

14. Engine mount (4) according to claim 13, **characterized in that** said mounting means also comprise a forward attachment (10) fixed to a first point (P1) of the rigid structure (8), and an aft attachment (12) fixed to a second point (P2) of the rigid structure (8), and **in that** said thrust mount device (14) is fixed to said rigid structure (8) at a third point (P3) separate from said first and second points (P1, P2).

15. Engine mount (4) according to claim 13 or claim 14, **characterized in that** said pin system (32) is positioned at an angle relative to a vertical direction (Z) of said engine mount.

16. Engine mount (4) according to claim 15, **characterized in that** said pin system (32) extends towards the aft away from the rigid structure (8).

17. Method to mount an aircraft engine (2) on a rigid structure (8) of an engine mount (4) according to any of claims 13 to 16, **characterized in that** it comprises a step to assemble said evener bar (28), previously connected to said engine via links (26), onto said arrangement (33) previously mounted on said rigid structure (8), said assembly step comprises the following successive operations:
- moving the pin extending member (60) in the second direction (46) relative to the pin system (32) lying in its retracted position, so that it passes through said second passageway (68) provided on the evener bar (28) until it reaches its extended position; and
- setting in movement the pin extending member (60) to cause displacement of said pin system (32) through said first and second pin system passageways (38, 68) towards its normal extended position.

18. Mounting method according to claim 17, **characterized in that** prior to said assembly step of said evener bar (28), said pin system (32) is moved from its normal extended position to its retracted position by bearing against said evener bar (28) when lifting said engine towards its final position relative to the engine mount.

19. Mounting method according to claim 17 or claim 18, **characterized in that** said assembly step of said evener bar (28) is preceded by a step to mount a forward engine attachment (10) and a step to mount an aft engine attachment (12).

20. Mounting method according to any of claims 17 to 19, **characterized in that** said operation setting the pin extending member (60) in movement so as to cause displacement of said pin system (32) through said first and second passageways (38, 68), is performed using tooling (80) having opposite bearing points on said evener bar (28) and on the pin extending member (60) respectively, and by rotating the pin extending member (60) in the form of a screw cooperating with said pin system (32).

21. Mounting method according to any of claims 17 to 28, **characterized in that** said operation setting the pin extending member (60) in movement so as to cause displacement of said pin system (32) through said first and second passageways (38, 68), is performed using an olive-shaped guide (78) mounted on one end of the pin system (32).

## Patentansprüche

1. Anordnung (33) zur Verbindung einer Traverse einer Vorrichtung (28) zur Aufnahme von durch ein Triebwerk (6) eines Luftfahrzeugs erzeugten Schubkräften mit einer starren Struktur (8) eines Aufhängungssystems (4) dieses Triebwerks, wobei die Anordnung (33) einerseits einen Beschlag (34) umfaßt, der fest an der starren Struktur (8) anzubringen ist und durch den ein erster Durchgang für ein Achsensystem (38), der sich längs einer ersten Längsachse (40) erstreckt, hindurchgeht, und andererseits ein Achsensystem (32) aufweist, das durch den ersten Durchgang für ein Achsensystem (38) hindurchgeht,
**dadurch gekennzeichnet, daß** das Achsensystem (32) derart in dem ersten Durchgang (38) verschiebbar angebracht ist, daß ein Verschieben desselben längs der ersten Längsachse in einer ersten Richtung (44) von einer normalen ausgefahrenen Position, in der es in Bezug auf den Beschlag (34) ausreichend hervorsteht, um mit der Traverse (28) zusammenwirken zu können, in eine Rückzugsposition, in der es in eben diesen Beschlag eingefahren ist, und umgekehrt in einer zweiten Richtung (46) von der Rückzugsposition in die normale ausgezogene Position möglich ist, und daß die Anordnung ferner ein Achsenverlängerungsorgan (60) umfaßt, das von dem Achsensystem (32) innen getragen wird und parallel zur ersten Längsachse, bezogen auf das Achsensystem (32), in der zweiten Richtung (46) von einer normalen Rückzugsposition, in der es in dem Achsensystem (32) eingefahren ist, in eine ausgefahrene Position, in der es mit dem Achsensystem (32) verbunden ist und in Bezug auf dieses hervorsteht, und umgekehrt in der ersten Richtung (44) von der ausgezogenen Position in die normale Rückzugsposition verschoben werden kann.

2. Anordnung (33) nach Anspruch 1, **dadurch gekennzeichnet, daß** das Achsensystem (32) mit Anschlagmitteln (58) ausgestattet ist, die das Blockieren einer Verschiebung des Achsensystems (32) in der zweiten Richtung (46) in Bezug auf den Beschlag (34), wenn das Achsensystem (32) die normale ausgezogene Position einnimmt, ermöglichen.

3. Anordnung (33) nach Anspruch 2, **dadurch gekennzeichnet, daß** die Anschlagmittel die Form eines Flansches (58), der an dem Achsensystem (32) angebracht ist, aufweisen.

4. Anordnung (33) nach einem der vorhergehenden Ansprüche, **dadurch gekennzeichnet, daß** sie ein Führungsorgan (62) des Achsensystems (32), das fest an dem Beschlag (34) angebracht ist, aufweist.

5. Anordnung (33) nach Anspruch 4, **dadurch gekennzeichnet, daß** das Führungsorgan (62) einen Anschlag (66) aufweist, der eine Verschiebung des Achsensystems (32) in der ersten Richtung (44) in Bezug auf den Beschlag (34) blockieren kann.

6. Anordnung (33) nach Anspruch 4 oder Anspruch 5, **dadurch gekennzeichnet, daß** das Führungsorgan (62) zur Verhinderung einer Drehung des Achsensystems (32) um die erste Längsachse (40) während dessen Verschiebungsbewegung längs eben dieser Achse gestaltet ist.

7. Anordnung (33) nach einem der vorhergehenden Ansprüche, **dadurch gekennzeichnet, daß** das Achsenverlängerungsorgan eine an dem Achsensystem (32) angebrachte Schraube (60) ist, wobei diese Schraube in das Innere dieses Achsensystems eindringt.

8. Anordnung (33) nach Anspruch 4 oder Anspruch 7, **dadurch gekennzeichnet, daß** die Schraube (60) längs der ersten Längsachse (40) angeordnet ist.

9. Anordnung (33) nach einem der vorhergehenden Ansprüche, **dadurch gekennzeichnet, daß** das Achsensystem (32) eine innere Achse (48) und eine äußere Achse (50), die konzentrisch sind, aufweist, wobei diese beiden Achsen miteinander verbunden sind und die innere Achse (48) hohl ist, so daß die Aufnahme des Achsenverlängerungsorgans (60) möglich ist.

10. Vorrichtung (14) zur Aufnahme von durch ein Triebwerk eines Luftfahrzeugs erzeugten Schubkräften, wobei die Vorrichtung zwischen das Triebwerk (6) und eine starre Struktur (8) eines Aufhängungssystems (4) dieses Triebwerks einzufügen ist und die folgenden Elemente umfaßt:
- eine Anordnung (33) nach einem der vorhergehenden Ansprüche;
- zwei seitliche Stangen zur Aufnahme von Schubkräften (26), wobei die Stangen jeweils ein Vorderende zur Verbindung mit dem Triebwerk sowie ein Hinterende umfassen; und
- eine Traverse (28), mit der die zwei Hinterenden der seitlichen Stangen zur Aufnahme von Schubkräften (26) beweglich verbunden sind, wobei durch diese Traverse ein zweiter Durchgang für ein Achsensystem (68), der sich längs einer zweiten, mit der ersten Längsachse (40) zusammenfallenden Längsachse (70) erstreckt, hindurchgeht, wobei durch den zweiten Durchgang (70) das Achsensystem (32) der Anordnung hindurchgeht.

11. Vorrichtung (14) zur Aufnahme von Schubkräften nach Anspruch 10, **dadurch gekennzeichnet, daß** sie ferner abnehmbare Mittel (72) zur Blockierung einer Verschiebung des Achsensystems umfaßt, die eine Verschiebungsbewegung des Achsensystems (32) durch den ersten und den zweiten Durchgang (38, 68) in der ersten Richtung (44) verhindern.

12. Vorrichtung (14) zur Aufnahme von Schubkräften nach Anspruch 11, **dadurch gekennzeichnet, daß** die abnehmbaren Mittel zur Blockierung einer Verschiebung die Form einer Mutter (72) aufweisen, die auf das Achsensystem (32) geschraubt ist und an der Traverse (28) abgestützt ist.

13. Aufhängungssystem (4) für ein Triebwerk (6), das zwischen einen Tragflügel (2) eines Luftfahrzeugs und das Triebwerk (6) einzufügen ist, wobei das System eine starre Struktur (8) und Aufhängemittel für das Triebwerk (6) an der starren Struktur (8) umfasst, wobei die Aufhängemittel eine Vorrichtung zur Aufnahme von durch das Triebwerk (6) erzeugten Schubkräften (14) nach einem der Ansprüche 10 bis 12 umfassen.

14. Aufhängungssystem (4) nach Anspruch 13, **dadurch gekennzeichnet, daß** die Aufhängemittel ferner eine vordere Befestigung (10), die an einem ersten Punkt (P1) der starren Struktur (8) befestigt ist, und eine hintere Befestigung (12), die an einem zweiten Punkt (P2) der starren Struktur (8) befestigt ist, aufweisen und daß die Vorrichtung zur Aufnahme von Schubkräften (14) an der starren Struktur (8) an einem dritten Punkt (P3), der von dem ersten und dem zweiten Punkt (P1, P2) verschieden ist, befestigt ist.

15. Aufhängungssystem (4) nach Anspruch 13 oder Anspruch 14, **dadurch gekennzeichnet, daß** das Achsensystem (32) in Bezug auf eine Vertikalrichtung (Z) des Systems geneigt ist.

16. Aufhängungssystem (4) nach Anspruch 15, **dadurch gekennzeichnet, daß** sich das Achsensystem (32) nach hinten von der starren Struktur (8) entfernend erstreckt.

17. Verfahren zur Anbringung eines Triebwerks (2) eines Luftfahrzeugs an einer starren Struktur (8) eines Aufhängungssystems (4) des Triebwerks nach einem der Ansprüche 13 bis 16, **dadurch gekennzeichnet, daß** es einen Schritt des Zusammenfügens der Traverse (28), das zuvor über Stangen (26) mit dem Triebwerk verbunden wurde, mit der Anordnung (33), die zuvor an der starren Struktur (8) angebracht wurde, aufweist, wobei der Schritt des Zusammenfügens die aufeinanderfolgenden Operationen umfaßt:
- Verschieben des Achsenverlängerungsorgans (60) in Bezug auf das Achsensystem (32), das seine Rückzugsposition einnimmt, in der zweiten Richtung (46) derart, daß es durch den an der Traverse (28) vorgesehenen zweiten Durchgang (68) hindurchgeht und bis es dessen ausgezogene Position erreicht; und
- In-Bewegung-Setzen des Achsenverlängerungsorgans (60) derart, daß ein Verschieben des Achsensystems (32) durch den ersten und den zweiten Durchgang für das Achsensystem (38, 68) zur normalen ausgezogenen Position desselben hervorgerufen wird.

18. Anbringungsverfahren nach Anspruch 17, **dadurch gekennzeichnet, daß** vor dem Schritt des Zusammenfügens der Traverse (28) das Achsensystem (32) von dessen normaler ausgezogener Position zu dessen Rückzugsposition unter Abstützung gegen die Traverse (28) während einer Verschiebung des Triebwerks zu einer Endposition in Bezug auf das Aufhängungssystem verschoben wird.

19. Anbringungssystem nach Anspruch 17 oder Anspruch 18, **dadurch gekennzeichnet, daß** dem Schritt des Zusammenfügens der Traverse (28) ein Schritt der Anbringung einer vorderen Triebwerkbefestigung (10) sowie ein Schritt der Anbringung einer hinteren Triebwerkbefestigung (12) vorausgeht.

20. Anbringungsverfahren nach einem der Ansprüche 17 bis 19, **dadurch gekennzeichnet, daß** die Operation des In-Bewegung-Setzens des Achsenverlängerungsorgans (60) derart, daß ein Verschieben des Achsensystems (32) durch den ersten und den zweiten Durchgang (38, 68) hervorgerufen wird, mit Hilfe eines Werkzeugs (80), das sich jeweils gegenüberliegend an der Traverse (28) und an dem Achsenverlängerungsorgan (60) abstützt, und durch Bewirken einer Drehung des Achsenverlängerungsorgans (60), das die Form einer mit dem Achsensystem (32) zusammenarbeitenden Schraube einnimmt, bewirkt wird.

21. Anbringungssystem nach einem der Ansprüche 17 bis 20, **dadurch gekennzeichnet, daß** die Operation des In-Bewegung-Setzens des Achsenverlängerungsorgans (60) derart, daß eine Verschiebung des Achsensystems (32) durch den ersten und den zweiten Durchgang (38, 68) hervorgerufen wird, mit einer Führungsolive bzw. einem Führungsknopf (78), die bzw. der an einem Ende des Achsensystems (32) angebracht ist, ausgeführt wird.
